# EUROPÄISCHE PATENTSCHRIFT

(11) **EP 1 544 014 B1**
(45) Veröffentlichungstag und Bekanntmachung des Hinweises auf die Patenterteilung: **07.12.2005**
(21) Anmeldenummer: 04026881.5
(22) Anmeldetag: 12.11.2004
(51) Int. Cl.: B60J 7/14

(54) **Verstellbares Fahrzeugdach**
Adjustable vehicle roof
Toit de véhicule réglable

(30) Priorität: 15.12.2003 DE 10358960
(43) Veröffentlichungstag der Anmeldung: 22.06.2005
(73) Patentinhaber: CTS Fahrzeug-Dachsysteme GmbH, 74321 Bietigheim-Bissingen (DE)
(72) Erfinder: Schumacher, Thorsten, 25495 Kummerfeld (DE); Netzel, Peter, 20537 Hamburg (DE)
(74) Vertreter: Müller, Gottfried

(56) Entgegenhaltungen:
- US-A1- 2001 006 297
- US-A1- 2004 051 343
- US-B1- 6 585 310
- US-B2- 6 595 574

## Beschreibung

Die Erfindung bezieht sich auf ein verstellbares Fahrzeugdach nach dem Oberbegriff des Anspruches 1.

Derartige verstellbare Fahrzeugdächer, beispielsweise Hardtops mit einer Mehrzahl starrer Dachteile, sind aus US 6 585 310 bekannt, und zwischen einer den Fahrzeuginnenraum überdeckenden Schließposition und einer Ablageposition zu verstellen, in welcher die Dachteile in einem heckseitigen Verdeckkasten abgelegt sind. Um insbesondere bei höheren Fahrgeschwindigkeiten ein Anheben der Dachteile des geschlossenen Fahrzeugdaches, hervorgerufen durch einen strömungsbedingten Unterdruck auf der Dachaußenseite, zu vermeiden, ist beispielsweise beim Fahrzeugdach der DE 198 32 385 A1 eine Verriegelungseinrichtung vorgesehen, über die das der Windschutzscheibe benachbarte, vordere Dachteil am Windschutzscheibenrahmen zu arretieren ist. Die Verriegelungseinrichtung umfasst einen durch die seitlichen A-Säulen geführten Bowdenzug, welcher von einem in der Fahrzeugkarosserie angeordneten Stellglied betätigt wird, wodurch die Verriegelungsposition der Verriegelungseinrichtung einzustellen ist.

Die Problematik des unerwünschten Anhebens der Fahrzeug-Dachteile stellt sich aber insbesondere bei mehrteiligen Hardtops auch im Übergang zwischen dem vorderen Dachteil zu einem dahinter liegenden Dachteil bzw. zwischen dem hinteren Dachteil und dem Fahrzeugheck. Vorderes und hinteres Dachteil sind üblicherweise über eine Gelenkkinematik aneinander gekoppelt, so dass bei einer Krafteinwirkung auf die Außenseite des Fahrzeugdaches die Gefahr besteht, dass die Gelenkkinematik entsprechend ihrer kinematischen Bewegungsmöglichkeit angehoben wird.

Der Erfindung liegt das Problem zugrunde, in Schließposition des Fahrzeugdaches die Dachteile sicher zu verriegeln.

Dieses Problem wird erfindungsgemäß mit den Merkmalen des Anspruches 1 gelöst. Die Unteransprüche geben zweckmäßige Weiterbildungen an.

Das erfindungsgemäße Fahrzeugdach ist bei einer Betätigung seiner Dachkinematik zwischen Schließposition und Ablageposition zu verstellen. Das Fahrzeugdach weist eine Verriegelungseinrichtung auf, welche eine Dachverriegelungseinheit sowie eine Kinematikblockiereinheit umfasst. Über die Dachverriegelungseinheit ist mindestens ein Dachteil an einem angrenzenden Bauteil zu verriegeln, über die Kinematikblockiereinheit der Verriegelungseinrichtung ist die Dachkinematik in Schließposition des Fahrzeugdaches zu blockieren. Der Verriegelungseinrichtung kommt somit eine doppelte Funktion zu: Einerseits kann die Dachkinematik, über die das Fahrzeugdach verstellbar an die Fahrzeugkarosserie angebunden ist, in Schließstellung des Daches blockiert werden, andererseits wird separat von der Dachkinematik mindestens ein Dachteil zusätzlich verriegelt. Insgesamt ist hierdurch eine Verriegelung bzw. ein Blockieren an zwei unterschiedlichen Positionen im Fahrzeugdach möglich, wodurch die Sicherheit gegen ein unerwünschtes Anheben des Fahrzeugdaches insbesondere bei hohen Fahrzeuggeschwindigkeiten erheblich erhöht ist.

Die Dachverriegelungseinheit und die Kinematikblockiereinheit als Bestandteil der Verriegelungseinrichtung sind über ein Koppelglied verbunden und werden von einem gemeinsamen Stellglied beaufschlagt. Über das Koppelglied wird eine kinematische Verbindung zwischen der Dachverriegelungseinheit und der Kinematikblockiereinheit geschaffen. Hierdurch ist es möglich, an einer beliebigen Position - entweder an einem Bauteil der Dachverriegelungseinheit oder an einem Bauteil der Kinematikblockiereinheit oder unmittelbar am Koppelglied - das Stellglied angreifen zu lassen und die Stellbewegung des Stellgliedes auf beide Einheiten der Verriegelungseinrichtung zu übertragen. In bevorzugter Ausführung greift das Stellglied unmittelbar an dem Koppelglied an, wodurch eine symmetrische, gleichmäßige Kraftübertragung auf die beiden Einheiten erzielt wird.

In zweckmäßiger Weiterbildung ist zumindest entweder die Dachverriegelungseinheit oder die Kinematikblockiereinheit in eine Totpunktlage zu verstellen, zweckmäßig nehmen beide Einheiten in Blockier- bzw. Verriegelungsstellung jeweils eine Totpunktlage ein. Auf diese Weise wird ein unerwünschtes Lösen bzw. Entriegeln der betreffenden Einheiten wirksam verhindert. Das Lösen bzw. Entriegeln kann somit nur durch eine Beaufschlagung über das Stellglied in entgegengesetzte Stellrichtung erfolgen.

Die Dachverriegelungseinheit ist insbesondere translatorisch zwischen ihrer Verriegelungs- und Entriegelungsstellung von dem Stellglied zu verschieben. Die Kinematikblockiereinheit dagegen führt zweckmäßig bei der Überführung zwischen Blockier- und Freigabestellung eine Schwenkbewegung mit rotatorischer Komponente aus. Beide Bewegungen werden über zugeordnete Übertragungslenker bzw. Übertragungsstangen von dem gemeinsamen Koppelglied ausgelöst. Die Verschiebebewegung der Dachverriegelungseinheit besitzt den Vorteil, dass insbesondere bei einer Ausführung des Fahrzeugdaches als Hardtop mit einer Mehrzahl starrer Dachteile sämtliche Dachteile untereinander mithilfe eines kinematisch verbundenen Verschiebegestänges verriegelt bzw. entriegelt werden können. Hierfür ist jedem Dachteil ein Riegelteil zugeordnet, über das das betreffende Dachteil verriegelbar ist. Die Riegelteile bilden eine zusammenhängende, kinematische Kette und werden bei einer Beaufschlagung über das Stellglied gemeinsam translatorisch zwischen Verriegelungs- und Entriegelungsstellung verschoben.

Die Dachkinematik ist zweckmäßig als Viergelenkkinematik ausgeführt, wobei die Kinematikblockiereinheit einen schwenkbar an einem Hauptlenker oder Steuerlenker gehaltenen Verschlusshaken, einen am jeweils anderen Lenker schwenkbar gelagerten Zwischenhebel und einen Verschlusshaken-Übertragungslenker zwischen diesem Zwischenhebel und dem Verschlusshaken umfasst. Bei einer Drehbewegung des Zwischenlenkers, ausgelöst von einem Verbindungslenker, über den der Zwischenlenker mit dem Koppelglied in Verbindung steht, wird über den Verschlusshaken-Übertragungslenker eine Stellbewegung auf dem Verschlusshaken ausgeübt, welcher zwischen seiner Blockier- und Freigabestellung verstellt wird. In Blockierstellung liegen zweckmäßig die Gelenke des Verschlusshaken-Übertragungslenkers und das Drehgelenk des Zwischenlenkers etwa in einer Linie, wodurch die Totpunktlage der Kinematikblockiereinheit erreicht wird und ein versehentliches Lösen des Verschlusshakens sicher verhindert wird.

Weitere Vorteile und zweckmäßige Ausführungen sind den weiteren Ansprüchen, der Figurenbeschreibung und den Zeichnungen zu entnehmen. Es zeigen:
- Fig. 1: eine Ansicht auf ein dreiteiliges Hardtop-Fahrzeugdach in Schließposition, dargestellt mit einer Verriegelungseinrichtung, die eine Dachverriegelungseinheit und eine Kinematikblockiereinheit umfasst, welche jeweils in ihrer Verriegelungs- bzw. Blockierposition stehen,
- Fig. 2: eine Darstellung des Fahrzeugdaches in Ablageposition mit übereinander gelegtem Dachteilpaket,
- Fig. 3: eine Ausschnittvergrößerung aus Fig. 1 aus dem Bereich des hinteren Dachteiles mit der Dachkinematik,
- Fig. 4: eine Ausschnittvergrößerung aus Fig. 1 mit dem vorderen und mittleren Dachteil,
- Fig. 5: eine Fig. 3 entsprechende Darstellung, jedoch mit der Verriegelungseinrichtung in Entriegelungs- bzw. Freigabestellung,
- Fig. 6: das vordere und das mittlere Dachteil mit der Dachverriegelungseinheit in Entriegelungsstellung,
- Fig. 7: eine Detailansicht des Koppelgliedes, über das die Dachverriegelungseinheit und die Kinematikblockiereinheit kinematisch gekoppelt sind.

In den Figuren sind gleiche Bauteile mit gleichen Bezugszeichen versehen.

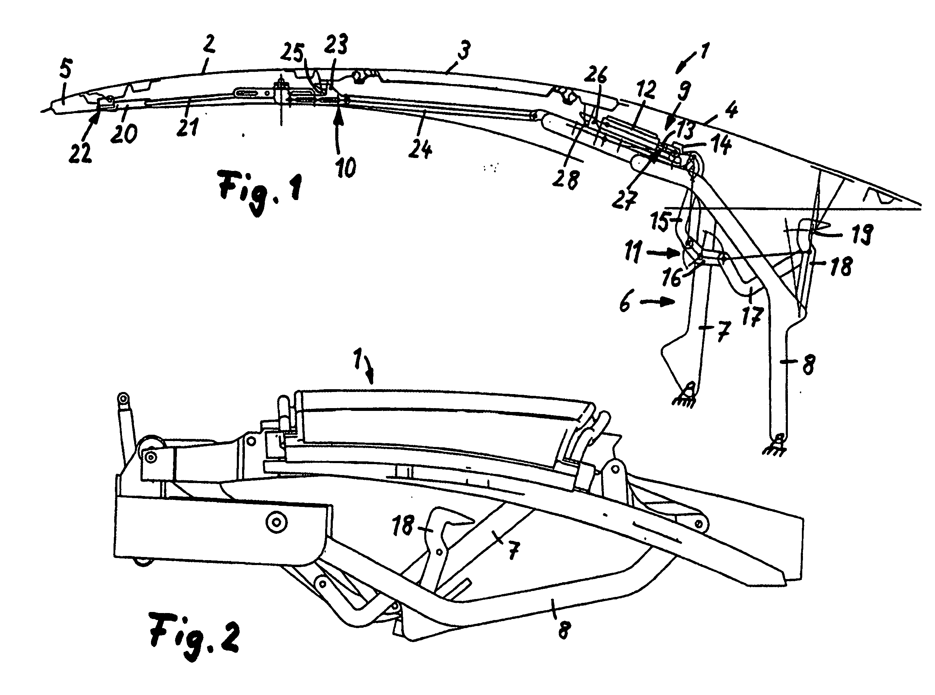

Bei dem in Fig. 1 in Schließposition dargestellten Fahrzeugdach 1 handelt es sich um ein dreiteiliges Hardtop mit einem vorderen Dachteil 2, einem mittleren Dachteil 3 und einem hinteren Dachteil 4, die in der Schließposition unmittelbar aneinander grenzend in Fahrzeuglängsrichtung gesehen hintereinander liegen und eine gemeinsame Dachaußenhaut bilden. In der Schließposition ist das vordere Dachteil 2 an einem Windschutzscheibenrahmen 5 festgelegt bzw. mit diesem verriegelt. Die Dachteile 2, 3 und 4 sind über eine Dachkinematik 6 an die Fahrzeugkarosserie angebunden, wobei die Dachkinematik 6 als Viergelenkkinematik ausgeführt ist und einen Hauptlenker 7 sowie einen Steuerlenker 8 umfasst, die jeweils einenends gelenkig mit der Fahrzeugkarosserie und anderenends gelenkig mit dem hinteren Dachteil verbunden sind. Die Dachkinematik 6 wird von einem nicht dargestellten Stellmotor angetrieben.

Weiterhin ist eine Verriegelungseinrichtung 9 im Fahrzeugdach 1 vorgesehen, über die die Dachteile 2, 3 und 4 untereinander bzw. gegenüber dem Windschutzscheibenrahmen zu verriegeln sind und über die darüber hinaus die Dachkinematik 6 blockiert werden kann. Die Verriegelungseinrichtung 9 umfasst eine Dachverriegelungseinheit 10, über die die Dachteile 2, 3 und 4 zu verriegeln sind, sowie eine Kinematikblockiereinheit 11, über die die Dachkinematik 6 zu blockieren ist. In Fig. 1 befindet sich die Verriegelungseinrichtung 9 in ihrer Verriegelungs- bzw. Blockierstellung, die der Schließstellung des Daches zugeordnet ist.

Der Verriegelungseinrichtung 9 ist als Betätigungselement ein im hinteren Dachteil 4 gehaltenes Stellglied 12 zugeordnet, welches insbesondere als hydraulisches Stellelement mit einem elongierbaren Stellzylinder 13 ausgeführt ist. Der Stellzylinder 13 beaufschlagt ein Koppelglied 14, an das sowohl ein Bauteil der Dachverriegelungseinheit 10 als auch ein Bauteil der Kinematikblockiereinheit 11 angebunden ist. Sowohl das Stellglied 12 als auch das Koppelglied 14 sind am hinteren Dachteil 4 gehalten. Gegebenenfalls kommt auch eine Verbindung mit dem Hauptlenker 7 oder dem Steuerlenker 8 in Betracht.

Bei einer Stellbewegung des Stellzylinders 13 wird das Koppelglied 14, welches gelenkig gelagert ist, verschwenkt. Diese Schwenkbewegung des Koppelglieds 14, das beispielsweise als Schwenkkonsole ausgeführt ist, wird sowohl auf die Dachverriegelungseinheit 10 als auch auf die Kinematikblockiereinheit 11 übertragen. Die Dachverriegelungseinheit 10 und die Kinematikblockiereinheit 11 besitzen somit im Koppelglied 14 einen gemeinsamen Drehpunkt.

Die Kinematikblockiereinheit 11 umfasst einen Verbindungslenker 15, einen Zwischenlenker 16, einen Verschlusshaken-Übertragungslenker 17 und einen Verschlusshaken 18. Der Verbindungslenker 15 ist einenends gelenkig mit dem Koppelglied 14 verbunden und andererseits gelenkig an dem als Dreiecklenker ausgeführten Zwischenlenker 16 gelagert, welcher seinerseits schwenkbar am Hauptlenker 7 angebunden ist. Auf der dem Verbindungslenker 15 gegenüberliegenden Seite besitzt der Zwischenlenker 16 ein weiteres Drehgelenk, über den der Zwischenlenker 16 mit dem Verschlusshaken-Übertragungslenker 17 gekoppelt ist, dessen gegenüberliegendes Ende gelenkig mit dem Verschlusshaken 18 verbunden ist. Der Verschlusshaken 18 ist gelenkig am Steuerlenker 8 gelagert. In der Blockierstellung umgreift der Verschlusshaken 18 einen Bolzen 19, welcher fest mit dem hinteren Dachteil 4 verbunden ist, derart, dass in der Blockierstellung ein Anheben des hinteren Dachteiles 4 wirksam unterbunden wird.

Die Dachverriegelungseinheit 10 umfasst ebenfalls eine Mehrzahl an Gestängeteilen, die kinematisch gekoppelt sind. Im Bereich des vorderen Dachteiles 2 umfasst die Dachverriegelungseinheit 10 einen vorderen Keilschieber 20, der in Verriegelungsstellung in eine zugeordnete vordere Aufnahme 22 am Windschutzscheibenrahmen 5 eingreift, in der Weise, dass ein Anheben des vorderen Dachteiles nach außen - gegebenenfalls auch eine Verschiebung in Längsrichtung - verhindert wird. Der vordere Keilschieber 20 wird von einer vorderen Übertragungsstange 21 translatorisch bewegt. Die vordere Übertragungsstange 21 ist im Bereich ihres hinteren, dem vorderen Keilschieber 20 abgewandten Endes mit einem mittleren Keilschieber 23 am mittleren Dachteil 3 verbunden, der mithilfe einer mittleren Übertragungsstange 24 zwischen seiner Verriegelungs- und seiner Entriegelungsposition zu verstellen ist. In Verriegelungsstellung greift der mittlere Keilschieber 23 in eine zugeordnete mittlere Aufnahme 25 ein, wodurch das mittlere Dachteil 3 arretiert wird.

Die mittlere Übertragungsstange 24 ist auf ihre der mittleren Keilschieber 23 abgewandten Seite mit einem hinteren Keilschieber 26 gekoppelt, der dem hinteren Dachteil 4 zugeordnet ist und in Verriegelungsstellung in eine zugeordnete hintere Aufnahme 28 einragt, wodurch ein unerwünschtes Anheben des hinteren Dachteiles verhindert wird. Der hintere Keilschieber 26 wird translatorisch von einer hinteren Übertragungsstange 27 verschoben, die auf ihrer dem hinteren Keilschieber 26 abgewandten Seite schwenkbar am Koppelglied 14 angebunden ist und bei einer Schwenkbewegung des Koppelgliedes 14, ausgelöst durch eine Stellbewegung des Stellgliedes 12, eine Verschiebebewegung auf sämtliche Keilschieber 20, 23 und 26 überträgt.

In Fig. 2 ist das Fahrzeugdach 1 in seiner Ablageposition dargestellt, in welcher die Dachteile des Fahrzeugdaches ein übereinander liegendes Dachteilpaket bilden, welches in einem heckseitigen Verdeckkasten abgelegt ist. Die Verriegelungseinrichtung muss zur Überführung des Fahrzeugdaches von Schließ- in Ablageposition zunächst entriegelt bzw. gelöst werden; hierbei wird die Verriegelungseinheit entriegelt und die Kinematikblockiereinheit gelöst.

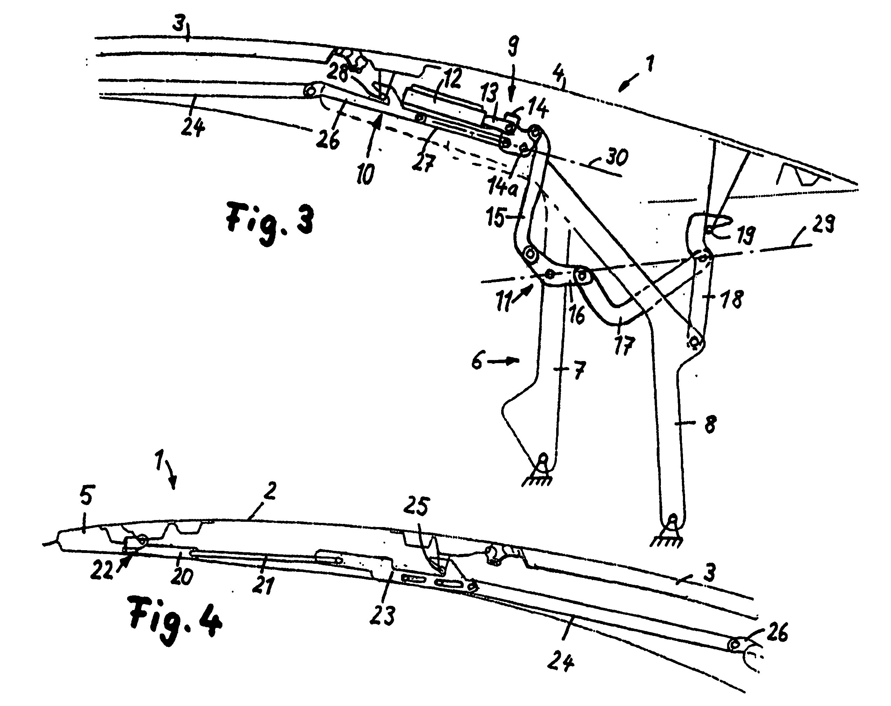

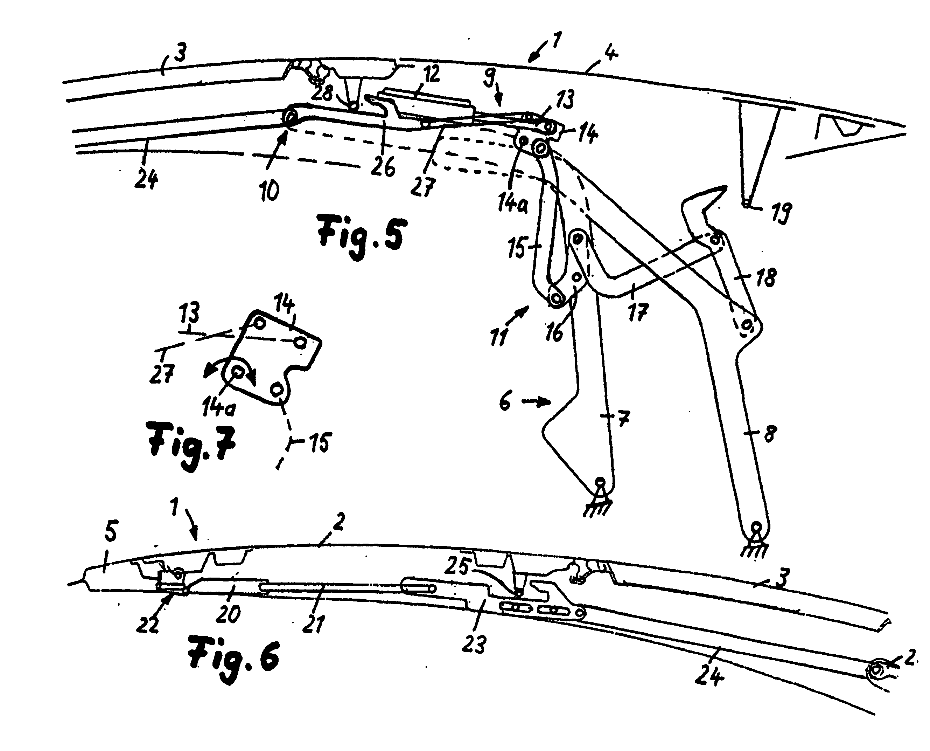

In den Fig. 3 und 4 ist jeweils eine Ausschnittvergrößerung des Fahrzeugdaches 1 in Schließposition mit der Verriegelungseinrichtung in Verriegelungsstellung bzw. Blockierstellung gezeigt. Wie Fig. 3 zu entnehmen, befindet sich die Kinematikblockiereinheit 11 in ihrer Blockierstellung, in welcher der Verschlusshaken 18 den Bolzen 19 am hinteren Dachteil 4 formschlüssig hintergreift. Mit der strichpunktierten Linie 29 sind die Gelenke des Verschlusshaken-Übertragungslenkers 17 am Zwischenlenker 16 und am Verschlusshaken 18 und auch das mittlere Drehgelenk des Zwischenlenkers 16, über den der Zwischenlenker am Hauptlenker 7 gelagert ist, miteinander verbunden. Die genannten Drehgelenke liegen näherungsweise auf der Linie 29; die Kinematikblockiereinheit 11 befindet sich somit in einer Totpunktlage, in welcher ein versehentliches, unbeabsichtigtes Aufschwenken des Verschlusshakens 18 um sein Drehgelenk am Steuerlenker 8 wirksam verhindert ist. Die Blockierstellung kann nur über eine Betätigung des Stellgliedes 12 und einer hierdurch ausgelösten Drehbewegung des Koppelglieds 14 um sein dachseitiges Drehgelenk 14a gelöst werden.

Auch die Dachverriegelungseinheit 10 befindet sich in ihrer Verriegelungsstellung, die zugleich eine Totpunktlage ist. Eingetragen ist die strichpunktierte Linie 30, welche in Verriegelungsstellung sowohl das Drehgelenk 14a des Koppelglieds 14 als auch beide Drehgelenke der hinteren Übertragungsstange 17 schneidet. Einer Öffnungsbewegung beispielsweise des hinteren Keilschiebers 26 steht diese Totpunktlage wirksam entgegen. Auch diese Totpunktlage kann nur durch eine Betätigung des Stellgliedes 12 und eine hierdurch verursachte Schwenkbewegung des Koppelgliedes 14 verlassen werden.

Wie Fig. 4 in Verbindung mit Fig. 3 zu entnehmen, bilden die Keilschieber 20, 23 und 26 gemeinsam mit den ihnen zugeordneten Übertragungsstangen 21, 24 und 27 eine zusammenhängende, kinematische Kette, so dass jede Schwenkbewegung des Koppelgliedes 14 unmittelbar in eine Verriegelungsbewegung bzw. Entriegelungsbewegung sämtlicher Keilschieber übertragen wird.

In den Fig. 5 und 6 ist das Fahrzeugdach 1 zwar noch in seiner Schließposition dargestellt, jedoch mit der Verriegelungseinrichtung 9 in entriegelter bzw. gelöster Stellung. Die Kinematikblockiereinheit ist gelöst, der Verschlusshaken 18 befindet sich in Außereingriff zum Bolzen 19 am hinteren Dachteil 4. Ebenso befinden sich sämtliche Keilschieber 20, 23 und 26 in ihrer zurückgezogenen Entriegelungsstellung und somit in Außereingriff mit den zugeordneten Aufnahmen 22, 25 bzw. 28. Das Fahrzeugdach 1 kann nunmehr durch Betätigen der Dachkinematik 6 in seine Öffnungs- bzw. Ablageposition überführt werden.

In Fig. 7 ist das Koppelglied 14 im Detail dargestellt. Eingetragen sind mit symbolischer, strichlierter Linie die am Koppelglied 14 angreifenden Bauteile, nämlich der Stellzylinder 13, welcher das Koppelglied 14 wie mit dem Pfeil angedeutet um dessen Drehgelenk 14a verschwenkt, sowie die hintere Übertragungsstange 27 und der Verbindungslenker 15. Über die hintere Übertragungsstange 27 wird die Kopplung zur Dachverriegelungseinheit 10 realisiert, über den Verbindungslenker 15 die Kopplung zur Kinematikblockiereinheit 11.

Wesentliches Erfindungsmerkmal ist, dass eine kinematische Kette mittels Zug/Druckstangen angetrieben und zum Verriegeln genutzt wird. Die Dachkinematik ist ebenfalls eine kinematische Kette, die sich mit der Kette des Verschlusses nur deshalb nicht behindert, weil die Drehpunkte der Verschlusskette in den erforderlichen Punkten mit denen der Dachkette zur Deckung gebracht werden.

## Patentansprüche

1. Verstellbares Fahrzeugdach, das mittels einer Dachkinematik (6) zwischen einer den Fahrzeuginnenraum überdeckenden Schließposition und einer den Fahrzeuginnenraum öffnenden Ablageposition verstellbar ist, mit einer Verriegelungseinrichtung (9) zum Verriegeln mindestens eines Dachteiles (2, 3, 4) des Fahrzeugdaches (1) mit einem angrenzenden Bauteil,
**dadurch gekennzeichnet,**
**dass** die Verriegelungseinrichtung (9) eine Dachverriegelungseinheit (10) zum Verriegeln des Dachteiles (2, 3, 4) an einem angrenzenden Bauteil und eine Kinematikblockiereinheit (11) zum Blockieren der Dachkinematik (6) in der Schließposition des Fahrzeugdaches (1) umfasst, wobei die Dachverriegelungseinheit (10) und die Kinematikblockiereinheit (11) über ein Koppelglied (14) verbunden sind, wobei zum gemeinsamen Verstellen von Dachverriegelungseinheit (10) und Kinematikblockiereinheit (11) ein gemeinsames Stellglied (12) vorgesehen ist.

2. Fahrzeugdach nach Anspruch 1,
**dadurch gekennzeichnet,**
**dass** die Dachverriegelungseinheit (10) translatorisch zwischen einer Verriegelungsstellung und einer Entriegelungsstellung verschiebbar ist.

3. Fahrzeugdach nach Anspruch 1 oder 2,
**dadurch gekennzeichnet,**
**dass** die Dachverriegelungseinheit (10) in Verriegelungsstellung in einer Totpunktlage steht.

4. Fahrzeugdach nach einem der Ansprüche 1 bis 3,
**dadurch gekennzeichnet,**
**dass** das Fahrzeugdach (1) als Hardtop mit mindestens zwei starren Dachteilen (2, 3, 4) ausgeführt ist, wobei die beiden Dachteile (2, 3, 4) über die Dachverriegelungseinheit (10) gegenseitig verriegelbar sind.

5. Fahrzeugdach nach Anspruch 4,
**dadurch gekennzeichnet,**
**dass** das Fahrzeugdach (1) drei starre Dachteile (2, 3, 4) aufweist und alle drei Dachteile (2, 3, 4) über die Dachverriegelungseinheit (10) gegenseitig verriegelbar sind.

6. Fahrzeugdach nach einem der Ansprüche 1 bis 5,
**dadurch gekennzeichnet,**
**dass** die Dachverriegelungseinheit (10) mindestens ein Riegelteil umfasst, der in Verriegelungsstellung in eine zugeordnete Riegelaufnahme eingreift.

7. Fahrzeugdach nach Anspruch 6,
**dadurch gekennzeichnet,**
**dass** das Riegelteil als Keilschieber (20) ausgeführt ist.

8. Fahrzeugdach nach Anspruch 6 oder 7,
**dadurch gekennzeichnet,**
**dass** eine Mehrzahl von Riegelteilen für die Verriegelung mehrerer Dachteile (2, 3, 4) in einer kinematischen Kette angeordnet sind.

9. Fahrzeugdach nach einem der Ansprüche 1 bis 8,
**dadurch gekennzeichnet,**
**dass** die Kinematikblockiereinheit (11) zwischen einer Blockierstellung und einer Freigabestellung zu verstellen ist und in Blockierstellung in einer Totpunktlage steht.

10. Fahrzeugdach nach einem der Ansprüche 1 bis 9,
**dadurch gekennzeichnet,**
**dass** die Kinematikblockiereinheit (11) einen Verschlusshaken (18) umfasst, der in Blockierstellung mit einem Dachteil (2, 3, 4) verriegelbar ist.

11. Fahrzeugdach nach Anspruch 10,
**dadurch gekennzeichnet,**
**dass** der Verschlusshaken (18) schwenkbar an einem gelenkig an die Fahrzeugkarosserie angeschlagenen Steuerlenker (8) der Dachkinematik (6) gelagert ist.

12. Fahrzeugdach nach Anspruch 11,
**dadurch gekennzeichnet,**
**dass** der Steuerlenker (8) mit einem gelenkig an die Fahrzeugkarosserie angeschlagenen Hauptlenker (7) einen Viergelenkmechanismus bildet.

13. Fahrzeugdach nach Anspruch 12,
**dadurch gekennzeichnet,**
**dass** die Kinematikblockiereinheit (11) einen am Hauptlenker (8) schwenkbar gelagerten Zwischenlenker (16) umfasst, der zum einen mit dem Koppelglied (14) und zum anderen mit dem Verschlusshaken (18) wirkverbunden ist.

14. Fahrzeugdach nach Anspruch 9 und 13,
**dadurch gekennzeichnet,**
**dass** der Zwischenlenker (16) über einen Verschlusshaken-Ubertragungslenker (17) mit dem Verschlusshaken (18) gekoppelt ist, wobei in Blockierstellung die Drehgelenke (14a) des Verschlusshaken-Übertragungslenkers (17) am Verschlusshaken (18) und am Zwischenlenker (16) zumindest näherungsweise in einer Linie mit dem Drehgelenk (14a) des Zwischenlenkers (16) am Hauptlenker (7) stehen.

15. Fahrzeugdach nach einem der Ansprüche 1 bis 14,
**dadurch gekennzeichnet,**
**dass** das Koppelglied (14) an einem Dachteil (2, 3, 4) schwenkbar gelagert ist.

16. Fahrzeugdach nach einem der Ansprüche 1 bis 15,
**dadurch gekennzeichnet,**
**dass** das Stellglied (12) an dem Koppelglied (14) angreift.

## Claims

1. Adjustable vehicle roof which can be adjusted by means of a roof kinematic mechanism (6) between a closed position covering the vehicle interior and a storage position opening the vehicle interior, having a locking device (9) for locking at least one roof part (2, 3, 4) of the vehicle roof (1) to an adjacent component, **characterized in that** the locking device (9) comprises a roof-locking unit (10) for locking the roof part (2, 3, 4) to an adjacent component and a kinematic-mechanism-blocking unit (11) for blocking the roof kinematic mechanism (6) in the closed position of the vehicle roof (1), the roof-locking unit (10) and the kinematic-mechanism-blocking unit (11) being connected via a coupling element (14), with a common actuating element (12) being provided for the joint adjustment of roof-locking unit (10) and kinematic-mechanism-blocking unit (11).

2. Vehicle roof according to Claim 1, **characterized in that** the roof-locking unit (10) can be displaced in a translatory manner between a locking position and an unlocking position.

3. Vehicle roof according to Claim 1 or 2, **characterized in that** the roof-locking unit (10) is in a dead centre position in the locking position.

4. Vehicle roof according to one of Claims 1 to 3, **characterized in that** the vehicle roof (1) is designed as a hardtop with at least two rigid roof parts (2, 3, 4), the two roof parts (2, 3, 4) being mutually lockable via the roof-locking unit (10).

5. Vehicle roof according to Claim 4, **characterized in that** the vehicle roof (1) has three rigid roof parts (2, 3, 4) and all three roof parts (2, 3, 4) are mutually lockable via the roof-locking unit (10).

6. Vehicle roof according to one of Claims 1 to 5, **characterized in that** the roof-locking unit (10) comprises at least one latch part which, in the locking position, engages in an associated latch receptacle.

7. Vehicle roof according to Claim 6, **characterized in that** the latch part is designed as a wedge-type slide (20).

8. Vehicle roof according to Claim 6 or 7, **characterized in that** a plurality of latch parts for locking a plurality of roof parts (2, 3, 4) are arranged in a kinematic chain.

9. Vehicle roof according to one of Claims 1 to 8, **characterized in that** the kinematic-mechanism-blocking unit (11) can be adjusted between a blocking position and an opening-up position and, in the blocking position, is in a dead centre position.

10. Vehicle roof according to one of Claims 1 to 9, **characterized in that** the kinematic-mechanism-blocking unit (11) comprises a closure hook (18) which, in the blocking position, can be locked to a roof part (2, 3, 4).

11. Vehicle roof according to Claim 10, **characterized in that** the closure hook (18) is mounted pivotably on a control link (8) of the roof kinematic mechanism (6), which control link is fastened in an articulated manner to the vehicle body.

12. Vehicle roof according to Claim 11, **characterized in that** the control link (8) forms a four-bar mechanism with a main link (7), which is fastened in an articulated manner to the vehicle body.

13. Vehicle roof according to Claim 12, **characterized in that** the kinematic-mechanism-blocking unit (11) comprises an intermediate link (16) which is mounted pivotably on the main link (8) and is operatively connected firstly to the coupling element (14) and secondly to the closure hook (18).

14. Vehicle roof according to Claims 9 and 13, **characterized in that** the intermediate link (16) is coupled to the closure hook (18) via a closure-hook transmission link (17), wherein, in the blocking position, the rotary joints (14a) of the closure-hook transmission link (17) on the closure hook (18) and on the intermediate link (16) are at least approximately in a line with the rotary joint (14a) of the intermediate link (16) on the main link (7).

15. Vehicle roof according to one of Claims 1 to 14, **characterized in that** the coupling element (14) is mounted pivotably on a roof part (2, 3, 4).

16. Vehicle roof according to one of Claims 1 to 15, **characterized in that** the actuating element (12) acts on the coupling element (14).

## Revendications

1. Toit de véhicule réglable, qui peut être déplacé au moyen d'une cinématique de toit (6) entre une position de fermeture recouvrant l'intérieur du véhicule et une position de rangement ouvrant l'intérieur du véhicule, comprenant un dispositif de verrouillage (9) pour le verrouillage d'au moins une partie de toit (2, 3, 4) du toit du véhicule (1) avec un composant adjacent,
**caractérisé en ce que**
le dispositif de verrouillage (9) comprend une unité de verrouillage de toit (10) pour verrouiller la partie de toit (2, 3, 4) à un composant adjacent et une unité de blocage de la cinématique (11) pour bloquer la cinématique du toit (6) dans la position de fermeture du toit du véhicule (1), l'unité de verrouillage du toit (10) et l'unité de blocage de la cinématique (11) étant connectées par le biais d'un organe d'accouplement (14), un organe de commande commun (12) étant prévu pour le réglage commun de l'unité de verrouillage du toit (10) et de l'unité de blocage de la cinématique (11).

2. Toit de véhicule selon la revendication 1,
**caractérisé en ce que**
l'unité de verrouillage du toit (10) peut être déplacée en translation entre une position de verrouillage et une position de déverrouillage.

3. Toit de véhicule selon la revendication 1 ou 2,
**caractérisé en ce que**
l'unité de verrouillage du toit (10) est dans une position de point mort dans la position de verrouillage.

4. Toit de véhicule selon l'une quelconque des revendications 1 à 3,
**caractérisé en ce que**
le toit du véhicule (1) est réalisé sous forme de hard-top avec au moins deux parties de toit rigides (2, 3, 4), les deux parties de toit (2, 3, 4) pouvant être verrouillées les unes aux autres par l'unité de verrouillage du toit (10).

5. Toit de véhicule selon la revendication 4,
**caractérisé en ce que**
le toit du véhicule (1) présente trois parties de toit rigides (2, 3, 4) et toutes les trois parties de toit (2, 3, 4) peuvent être verrouillées les unes aux autres par l'unité de verrouillage du toit (10).

6. Toit de véhicule selon l'une quelconque des revendications 1 à 5,
**caractérisé en ce que**
l'unité de verrouillage du toit (10) comprend au moins une partie de verrou qui vient en prise dans la position de verrouillage dans un logement de verrou associé.

7. Toit de véhicule selon la revendication 6,
**caractérisé en ce que**
la partie de verrou est réalisée sous forme de coulisseau à clavette (20).

8. Toit de véhicule selon la revendication 6 ou 7,
**caractérisé en ce qu'**une
pluralité de parties de verrou pour le verrouillage de plusieurs parties de toit (2, 3, 4) sont disposées dans une chaîne cinématique.

9. Toit de véhicule selon l'une quelconque des revendications 1 à 8,
**caractérisé en ce que**
l'unité de blocage de la cinématique (11) peut être réglée entre une position de blocage et une position de libération et est située en position de point mort dans la position bloquée.

10. Toit de véhicule selon l'une quelconque des revendications 1 à 9,
**caractérisé en ce que**
l'unité de blocage de la cinématique (11) comprend un crochet de fermeture (18) qui peut être verrouillé dans la position de blocage avec une partie de toit (2, 3, 4).

11. Toit de véhicule selon la revendication 10,
**caractérisé en ce que**
le crochet de fermeture (18) est monté à pivotement sur un bras oscillant de commande (8) de la cinématique du toit (6) monté de manière articulée sur la carrosserie du véhicule.

12. Toit de véhicule selon la revendication 11,
**caractérisé en ce que**
le bras oscillant de commande (8) forme avec un bras oscillant principal (7) monté sur la carrosserie du véhicule un mécanisme à quadrilatère articulé.

13. Toit de véhicule selon la revendication 12,
**caractérisé en ce que**
l'unité de blocage de la cinématique (11) comprend un bras oscillant intermédiaire (16) monté à pivotement sur un bras oscillant principal (8), qui est en liaison coopérante d'une part avec l'organe d'accouplement (14) et d'autre part avec le crochet de fermeture (18).

14. Toit de véhicule selon la revendication 9 et 13,
**caractérisé en ce que**
le bras oscillant intermédiaire (16) est accouplé par le biais d'un bras oscillant de transfert de crochet de fermeture (17) au crochet de fermeture (18), où, dans la position de blocage, les articulations pivotantes (14a) du bras oscillant de transfert du crochet de fermeture (17) sur le crochet de fermeture (18) et sur le bras oscillant intermédiaire (16) se trouvent au moins approximativement en alignement avec l'articulation pivotante (14a) du bras oscillant intermédiaire (16) sur le bras oscillant principal (7).

15. Toit de véhicule selon l'une quelconque des revendications 1 à 14,
**caractérisé en ce que**
l'organe d'accouplement (14) est monté à pivotement sur une partie de toit (2, 3, 4).

16. Toit de véhicule selon l'une quelconque des revendications 1 à 15,
**caractérisé en ce que**
l'organe de commande (12) vient en prise sur l'organe d'accouplement (14).
